# FASCICULE DE BREVET EUROPEEN

(11) **EP 3 661 793 B1**
(45) Date de publication et mention de la délivrance du brevet: **25.08.2021**
(21) Numéro de dépôt: 18752593.6
(22) Date de dépôt: 20.07.2018
(51) Int. Cl.: B60K 15/035, F02M 25/08, B60K 15/03

(54) **DISPOSITIF DE RÉGULATION DE PRESSION ET SON PROCÉDÉ D'ASSEMBLAGE, POUR UN ABSORBEUR DE VAPEURS DE CARBURANT**
DRUCKREGELVORRICHTUNG UND VERFAHREN FÜR IHREN ZUSAMMENBAU, FÜR EINEN KRAFTSTOFFDAMPFFILTER
PRESSURE REGULATION DEVICE AND ITS ASSEMBLY METHOD, FOR A FUEL VAPOUR ABSORBER

(30) Priorité: 02.08.2017 FR 1757419
(43) Date de publication de la demande: 10.06.2020
(73) Titulaire: Sogefi Filtration, 78280 Guyancourt (FR)
(72) Inventeur: COTON, Benjamin, 75015 Paris (FR); LADIMAT, Farid, 78260 Acheres (FR); FONNARD, Baptiste, 14730 Giberville (FR); SGHIOUAR, Marouane, 78280 GUYANCOURT (FR)
(74) Mandataire: Plasseraud IP
(86) Numéro de dépôt international: PCT/FR2018/051852
(87) Numéro de publication internationale: WO 2019/025696

(56) Documents cités:
- EP-A1- 1 702 785
- US-A- 5 809 978
- US-B1- 6 390 073

## Description

### DOMAINE DE L'INVENTION

La présente invention est relative aux dispositifs de traitement de vapeurs de carburant émanant d'un réservoir d'essence, typiquement pour un réservoir d'essence d'un véhicule à combustion interne (ex : automobiles, poids lourds, motocyclette, bateaux) ou d'un moteur thermique industriel. Le domaine d'application de l'invention concerne en particulier les dispositifs de régulation de pression formant partie d'un absorbeur de vapeurs d'essence et les procédés d'assemblage de tels dispositifs.

### ARRIERE-PLAN TECHNOLOGIQUE DE L'INVENTION

De manière connue en soi, un absorbeur de vapeurs de carburant (en particulier vapeurs d'essence), permet d'adsorber les vapeurs sur un matériau adsorbant ayant généralement une porosité élevée. Pour un véhicule dont le moteur est arrêté par exemple, notamment lorsque la température extérieure est chaude, cette fonction évite la propagation de vapeurs d'essence dans l'air. Cette fonction peut servir aussi quand le véhicule roule. Les réglementations de plus en plus sévères imposent de ne pas rejeter ces vapeurs à l'atmosphère et de les piéger dans un absorbeur, généralement rempli de charbon actif.

Il est classique d'intégrer dans ces lignes de récupération de vapeurs de carburants des vannes de régulation de la pression pour d'une part contrôler la pression à l'intérieur du réservoir de carburant et celle à l'intérieur de l'absorbeur de vapeurs, appelé également de façon courante "canister" en langue anglaise.

Souvent, des vannes de régulation multivoies peuvent être placées sur la ligne d'admission des vapeurs de carburant, en amont d'une entrée d'admission formée sur un couvercle de l'absorbeur de vapeurs de carburant.

Dans certains exemples, elles sont placées directement sur ou dans l'absorbeur de vapeurs (« *canister »).*

On connaît ainsi, par le document US 2009/0293726, des réservoirs de vapeurs pourvus d'un module de contrôle monté sur un couvercle pour permettre certaines opérations (purge par aération, évacuation/renvoi des vapeurs). L'assemblage de ce genre de module peut être complexe et n'autorise pas de flexibilité.

Le document WO 2011/067753 prévoit de monter un module indépendant du côté intérieur d'un piège formant ou associé à un absorbeur de vapeurs, afin d'éviter des pertes d'essence. Comme visible sur les figures 9A à 10D de ce document, il est alors nécessaire d'installer une vanne multivoies de régulation des pressions d'un flux de vapeurs de carburant, pour renvoyer les vapeurs vers le réservoir de carburant ou bien introduire des vapeurs de carburant dans l'unité de stockage de vapeurs, par l'ouverture et/ou la fermeture des clapets sensibles aux variations de pression différentielle. Dans ce genre de montage également, il n'est offert aucune flexibilité : les formes et dimensions de l'interface du boîtier de l'absorbeur de vapeurs doivent être précisément adaptées au module, notamment pour réaliser deux zones d'étanchéité vanne - boîtier (l'une du côté d'une mise à l'air, l'autre pour séparer la zone d'adsorption par rapport à la zone en communication directe avec le réservoir de carburant).

Un dispositif de régulation de pression pour un absorbeur de vapeurs de carburant est connu du document EP 1 702 785 A1.

Il existe donc un besoin pour des solutions plus simples de montage afin d'intégrer de façon plus aisée une fonction de régulation de pression, en permettant davantage de polyvalence.

### OBJETS DE L'INVENTION

La présente invention a pour but de pallier un ou plusieurs des inconvénients susmentionnés en proposant un dispositif de régulation de pression, convenant pour un absorbeur de vapeurs d'essence, qui est plus simple d'intégration.

A cet effet, l'invention concerne un dispositif de régulation de pression, selon la revendication 1, pour un
absorbeur de vapeurs de carburant (qui se place par exemple sur un circuit de mise à l'air) renfermant un produit d'épuration, généralement un produit d'adsorption, apte à fixer des molécules gazeuses de carburant, le dispositif comprenant :
- un élément de boîtier présentant une face interne et une face externe, destiné à former tout ou partie d'une enveloppe de l'absorbeur de vapeurs de carburant ;
- un orifice formé dans l'élément de boîtier et traversant une portion de paroi de l'élément de boîtier délimitée entre la face interne et la face externe ;
- une tubulure d'amenée des vapeurs de carburant, la tubulure s'étendant (typiquement autour d'un axe longitudinal) entre une première extrémité et une deuxième extrémité ; et
- une vanne pourvue d'un corps de vanne et d'un clapet, permettant de réguler la circulation de fluide au travers de l'orifice ;
la tubulure étant agencée de façon à :
- traverser la portion de paroi, par introduction d'une partie d'insertion de la tubulure dans l'orifice ;
- être fixée (de préférence directement fixée) à l'élément de boîtier, de façon à former au moins une première zone d'étanchéité annulaire autour de la tubulure ; et
- constituer un support de montage de tout ou partie de la vanne, par exemple afin de loger la vanne au moins en partie du côté de la face interne.

Avec cette conception, la vanne ne nécessite aucune adaptation particulière par rapport à l'élément de boîtier, l'élément de tubulure étant suffisant pour supporter la vanne. L'emplacement de montage de la vanne peut faire partie du volume intérieur de l'absorbeur.

Une fois fixée, la tubulure peut typiquement présenter une partie d'insertion (insérée dans l'orifice) qui s'étend essentiellement en saillie vers l'extérieur par rapport à la portion de paroi de l'élément de boîtier. Cette partie d'insertion inclut la première extrémité, qui forme par exemple un raccord mâle pour un tuyau ou flexible appartenant à la ligne de ventilation du réservoir de carburant.

Avantageusement, seule la tubulure est en contact avec l'élément de boîtier et il est permis de supprimer tout contact d'étanchéité supplémentaire pour la mise en place de la vanne. A titre d'exemple, la vanne peut être simplement encliquetée sur la tubulure.

Selon une particularité, la tubulure est constituée par une canule formée d'une seule pièce, ayant typiquement une deuxième extrémité plus large que la première extrémité. La canule peut présenter un relief tel qu'un bourrelet externe permettant de former une zone de contact étanche avec un tuyau ou flexible de la ligne de ventilation.

Selon une particularité, la portion de paroi est perpendiculaire à l'axe longitudinal de la tubulure et est elle-même formée dans une projection, saillante vers l'extérieur, de l'élément de boîtier.

De préférence, la vanne s'étend au moins en partie dans une cavité délimitée par cette projection. Ce type de disposition correspond à un bon compromis entre l'accessibilité de la canule ou forme similaire de connexion de la tubulure et l'intégration compacte de la vanne, en optimisant le volume intérieur de l'absorbeur.

Selon une particularité, un élément d'étanchéité du clapet est placé en contact avec ou à l'intérieur de la tubulure, au moins dans une position d'obturation par le clapet empêchant des vapeurs de carburant de sortir de la tubulure par la deuxième extrémité. Cet agencement permet d'intégrer tout ou partie de la vanne du côté de la deuxième extrémité de la tubulure, en minimisant l'encombrement propre à la vanne.

Dans divers modes de réalisation du dispositif de régulation de pression selon l'invention, on peut éventuellement avoir recours en outre à une ou plusieurs des dispositions suivantes :
- le corps de vanne et/ou le clapet de la vanne est(sont) entièrement logé(s) du côté de la face interne.
- un contact étanche direct entre une face externe de la tubulure et une pièce monobloc formant la portion de paroi de l'élément de boîtier, qui est réalisé de façon circonférentielle, est inclus dans la première zone d'étanchéité annulaire.
- ladite première zone d'étanchéité annulaire comprend une zone annulaire soudée continue ou au moins deux zones annulaires soudées continues agencées de façon concentrique (avec ce type de fixation, on obtient une configuration robuste de l'élément de boîtier fonctionnel, prêt à être monté sur un composant de boîtier complémentaire).
- le corps de vanne est traversé par un axe central coïncidant avec l'axe longitudinal de la tubulure.
- le clapet est mobile en coulissement de façon parallèle à l'axe longitudinal en étant guidé par l'un au moins parmi :
   - une paroi tubulaire du corps de vanne ;
   - un élément de rappel élastique lui-même guidé en translation par le corps de vanne ;
   - une portion de guidage formée par la deuxième extrémité de la tubulure.
- le clapet présente un organe rigide guidé parallèlement à l'axe longitudinal et un élément d'étanchéité flexible monté sur l'organe rigide, apte à s'engager contre une surface de siège formée par le corps de vanne, dans une position d'obturation du clapet.
- à distance de la surface de siège, une deuxième zone d'étanchéité annulaire est formée de façon permanente dans un état monté de la vanne sur la tubulure, par un contact direct entre :
   - la tubulure ; et
   - un joint annulaire supporté par le corps de vanne ou un relief annulaire d'étanchéité directement formé sur le corps de vanne.
- le clapet présente un organe rigide guidé parallèlement à l'axe longitudinal et un élément annulaire d'étanchéité flexible monté sur l'organe rigide, de préférence dans une gorge circonférentielle de l'organe rigide, une deuxième zone d'étanchéité annulaire étant formée par un contact direct entre la tubulure et l'élément d'étanchéité dans une position d'obturation du clapet.
- une surface de siège, sur laquelle s'engage le clapet dans une position de fermeture de la vanne, peut être formée par la tubulure et est utilisée pour constituer la deuxième zone d'étanchéité (dans ce cas, il est permis avantageusement de n'utiliser qu'un seul joint technique pour réaliser à la fois l'étanchéité radiale tubulure - clapet et l'étanchéité de l'obturation de l'ouverture axiale de la tubulure, du côté de la deuxième extrémité).
- l'élément de boîtier est une pièce qui peut présenter en outre au moins un orifice additionnel, de préférence deux orifices additionnels, afin de :
   - définir une entrée d'admission d'air sans passer par la tubulure,
   - former une sortie permettant d'évacuer des gaz propres (ayant subi une purification typiquement par adsorption des vapeurs d'essence sur un matériau adsorbant présent dans le volume intérieur de l'absorbeur).
- l'orifice pour l'admission des vapeurs de carburant et le ou les orifices additionnels sont formés avantageusement d'un même côté (sur le dessus en pratique) de l'absorbeur de vapeurs de carburant.
- la tubulure est conçue indépendamment de l'élément de boîtier, ce grâce à quoi une partie de la tubulure, complémentaire de la partie d'insertion et comprenant la deuxième extrémité, forme une interface d'adaptation et de fixation pour connecter la vanne, de préférence par encliquetage.
- la deuxième extrémité présente des moyens de retenue, par exemple sous la forme d'une gorge annulaire, d'évidements ou de fenêtres, permettant de recevoir des ergots radialement saillants vers l'extérieur, formés sur une face externe périphérique du corps de vanne.
- les évidements ou les fenêtres forment des moyens de retenue anti-rotation pour bloquer en rotation le corps de vanne (ce qui évite des sollicitations dans le cas où un joint annulaire est prévu par ailleurs sur le corps de vanne, pour former une zone d'étanchéité contre la tubulure).
- la vanne est du type démontable par rapport à la tubulure, le corps de vanne étant en plastique et ayant des organes élastiquement déformables pour se désengager des moyens de retenue de la tubulure.

Selon une particularité, le clapet est adapté pour présenter :
- deux configurations, dont l'une correspond à une position du clapet distante d'une surface de siège pour permettre à des vapeurs de carburant, provenant d'un conduit de la tubulure qui s'étend jusqu'à la première extrémité, de traverser la vanne selon un premier sens de circulation, et l'autre correspond à une position d'obturation du clapet dans laquelle le clapet est sollicité par une force de rappel d'un élément de rappel élastique et maintenu en contact annulaire étanche avec la surface de siège en empêchant ledit premier sens de circulation,
- optionnellement une troisième configuration dans laquelle un élément d'étanchéité du clapet présente une conformation élastiquement déformée alors que le clapet est sollicité par l'élément de rappel élastique vers la surface de siège, de façon à permettre un deuxième sens de circulation opposé au premier sens de circulation pour renvoyer des vapeurs de carburant dans le conduit de la tubulure.

Il est également proposé un absorbeur de vapeurs de carburant (par exemple absorbeur destiné à être placé sur un circuit de mise à l'air), comprenant une entrée d'admission d'air, un composant de boîtier, par exemple sous la forme d'un réceptacle ou bol, et le dispositif d'épuration selon l'invention de façon à inclure la tubulure d'amenée des vapeurs de carburant, qui est distincte/séparée de l'entrée d'admission d'air et adaptée pour se connecter à une ligne de ventilation d'un réservoir de carburant, sachant que l'élément de boîtier est fixé sur le composant de boîtier ou réceptacle de façon étanche afin de former un boîtier qui délimite un volume intérieur, dans lequel des moyens d'adsorption qui incluent au moins un produit d'adsorption apte à fixer des molécules gazeuses de carburant sont contenus dans le volume intérieur.

Selon une particularité, il est prévu au moins trois canules (et par exemple exactement trois canules) ayant respectivement des fonctions spécifiques, ces canules pouvant être :
- la canule d'amenée des vapeurs (en provenance du réservoir),
- la canule d'admission air moteur qui permet d'injecter l'air purifié vers le moteur,
- et une canule de purge par admission d'air dans l'absorbeur ; cette canule a en fait typiquement deux fonctions puisqu'elle permet la purge du charbon par introduction d'air mais elle permet aussi d'évacuer vers l'environnement extérieur l'air purifié (l'air purifié est généralement envoyé vers l'extérieur dans les phases d'arrêt du moteur au besoin ou bien lorsqu'il n'est plus possible d'envoyer de l'air vers admission moteur).

Optionnellement, les canules s'étendent du même côté de l'absorbeur.

Selon une particularité, l'élément de boîtier est un couvercle d'un seul tenant, sur lequel sont formés l'entrée d'admission d'air, l'orifice pour l'insertion de la tubulure et un orifice additionnel permettant l'admission d'air purifié vers le moteur.

Selon une particularité, l'élément de boîtier s'étend à l'opposé d'une paroi de fond du réceptacle, en surmontant une paroi latérale du boîtier, l'élément de boîtier étant fixé de façon amovible et étanche à la paroi latérale.

Selon une particularité, l'élément de boîtier est typiquement réalisé d'une pièce, de préférence en matière plastique.

Dans une variante, l'élément de boîtier est réalisé en au moins deux pièces assemblée de manière étanche entre elles.

Il est également proposé une méthode d'assemblage d'assemblage, selon la revendication 14, pour obtenir un élément de boîtier fonctionnel (en particulier fonctionnel pour réguler la pression interne d'un absorbeur), destiné à faire partie d'un absorbeur de vapeurs de carburant pouvant être relié à une ligne de ventilation d'un réservoir de carburant (l'absorbeur étant typiquement placé sur un circuit de mise à l'air associé au réservoir), la méthode d'assemblage étant réalisée en utilisant une tubulure d'amenée des vapeurs de carburant qui s'étend (autour d'un axe longitudinal) entre une première extrémité et une deuxième extrémité, la tubulure pouvant être, du côté de la deuxième extrémité, au moins en partie plus large qu'une partie d'insertion de la tubulure qui inclut la première extrémité, la méthode d'assemblage comprenant les étapes consistant essentiellement à :
a) insérer, dans un orifice traversant un élément de boîtier, la partie d'insertion de la tubulure, préférentiellement de façon à ce que la partie d'insertion s'étende essentiellement en saillie vers l'extérieur par rapport à une portion de paroi de l'élément de boîtier qui délimite l'orifice ;
b) monter, sur la tubulure, et de préférence du côté de la deuxième extrémité, une vanne afin de loger la vanne au moins en partie du côté de la face interne, en permettant à la vanne de réguler la circulation de fluide au travers de l'orifice, la vanne étant pourvue d'un corps de vanne et d'un clapet ;
c) former une zone d'étanchéité annulaire tubulure - élément de boîtier, autour de la tubulure, par une fixation permanente qui rend la tubulure solidaire de l'élément de boîtier ;
   ce grâce à quoi, après les étapes a), b) et c), on obtient l'élément de boîtier fonctionnel pour réguler l'admission de vapeurs de carburant et apte à être fixé sur un composant de boîtier complémentaire ou un réceptacle, contenant un produit d'adsorption servant à fixer des molécules gazeuses de carburant.

Ce type d'assemblage permet de tirer astucieusement partie d'une pièce formant tubulure pour monter la vanne du côté interne de l'élément de paroi, la tubulure formant alors une interface d'adaptation entre la vanne et le boîtier de l'absorbeur.

La vanne peut être simple, par exemple du type à une seule voie, et peut être conçue de façon indépendante. Il est donc permis de fabriquer la vanne à un nombre d'exemplaires nettement supérieur à ceux des absorbeurs d'une même gamme, en la connectant à différentes tubulures d'adaptation.

Optionnellement, on peut réaliser une zone d'étanchéité annulaire vanne - tubulure, lors de l'étape b), soit de façon permanente dans l'état monté, soit pour une position par défaut du clapet d'engagement contre la tubulure, dans un état sollicité du clapet par un élément de rappel élastique appartenant à la vanne.

### BREVE DESCRIPTION DES DESSINS

D'autres caractéristiques et avantages de l'invention apparaîtront au cours de la description suivante de plusieurs modes de réalisation, donnés à titre d'exemples non limitatifs, en regard des dessins joints dans lesquels :
- la figure 1 est une vue en coupe d'un dispositif de régulation de pression selon un premier mode de réalisation conforme à l'invention ;
- la figure 2 reprend la vue en coupe de la figure 1 en illustrant sélectivement l'élément de boîtier et la tubulure ;
- la figure 3 est un schéma du circuit de vapeurs issues d'un réservoir de carburant, illustrant notamment un absorbeur de vapeurs de carburant;
- la figure 4 est une vue en perspective éclatée de la vanne utilisée dans le dispositif de la figure 1 ;
- la figure 5 est une vue de dessus d'un absorbeur de vapeurs de carburant conforme à l'invention, comportant la tubulure insérée au travers de l'élément de paroi, avec la partie d'insertion de la tubulure visible,
- la figure 6 est une vue en coupe illustrant la partie haute de l'absorbeur de la figure 5, et montrant un deuxième mode de réalisation du dispositif de régulation de pression,
- la figure 7 est une vue en coupe illustrant la partie basse de l'absorbeur de la figure 5 ;
- la figure 8 montre un détail de la figure 6.

### DESCRIPTION DES MODES DE REALISATION PREFERES DE L'INVENTION

Sur les différentes figures, des références identiques indiquent des éléments identiques ou similaires.

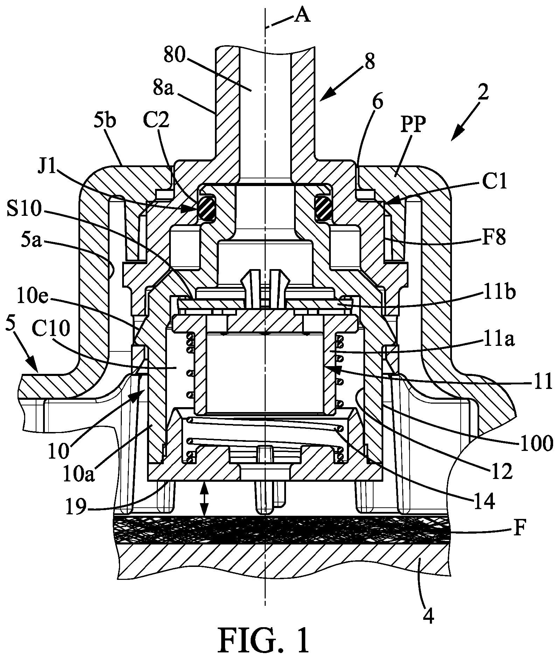

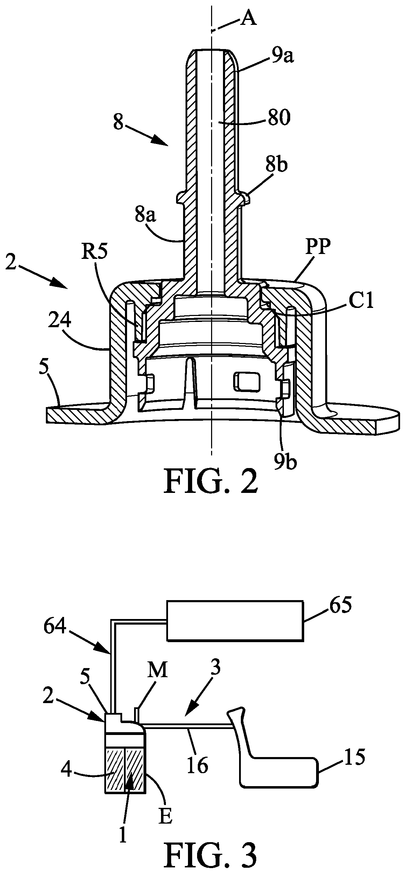

En référence aux figures 1, 3, 6 et 7, l'absorbeur de vapeurs de carburant 1 est du type équipé d'un dispositif de régulation de pression 2 afin de permettre aux vapeurs de carburant d'entrer dans le volume intérieur V seulement en cas de différence de pression positive du côté du réservoir de carburant. Une mise à l'air est également permise par l'absorbeur 1, qui est ici placé sur le circuit de mise à l'air 3, comme schématisé sur la figure 3.

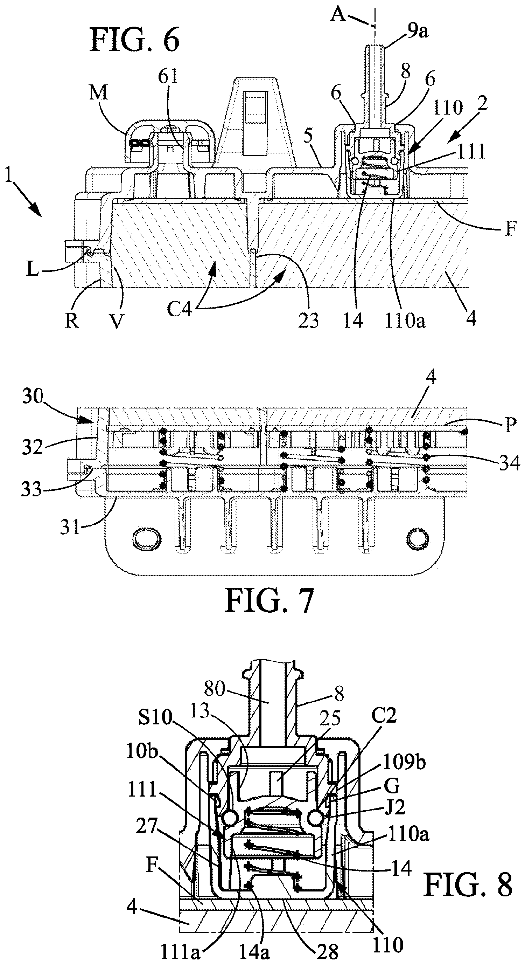

L'absorbeur 1 peut présenter une enveloppe externe E pour délimiter le volume intérieur V. En référence à la figure 3, l'absorbeur 1 est relié au réservoir de carburant 15 par une ligne de ventilation 16. À mesure que la température du carburant augmente du côté du réservoir 15, la vapeur s'écoule dans la ligne de ventilation 16 et pénètre dans le volume intérieur V de l'absorbeur 1, à travers l'entrée de vapeur formée par une tubulure 8 solidaire d'un élément de boîtier 5 de l'absorbeur 1. La première extrémité 9a, ici étroite, de la tubulure 8 forme le raccord de fixation avec la ligne de ventilation 16, tandis la deuxième extrémité 9b (figure 2) ou 109b (figure 8) de cette tubulure 8 sert d'interface de fixation à la fois pour une connexion à l'élément de boîtier 5 et pour le montage d'une vanne 10 ou 110.

En référence aux figures 1 et 6, la vapeur traverse en effet l'orifice 6 équipé de l'ensemble constitué par la tubulure 8 et la vanne 10 ou 110, à condition que la pression soit suffisante du côté du réservoir de carburant 15. En fonctionnement, la vapeur peut former un mélange d'air / carburant. Dans l'absorbeur 1, cette vapeur peut se diffuser dans des chambres internes C4 contenant un produit d'adsorption 4, typiquement des granules de charbon actif.

Ici, le boîtier 30 qui constitue l'enveloppe E est muni de plusieurs compartiments communicants dont au moins une partie forme les chambres internes C4 remplies de charbon actif. Du côté opposé à l'élément de boîtier 5 pourvu des canules de connexion ou raccords similaires, il est prévu une plaque de compression mobile P, bien visible sur la figure 7. Cette plaque de compression mobile P est montée en appui à l'encontre d'une force de rappel élastique, ici exercée par un ensemble de ressorts 34 engagées contre une paroi de fond 31 du boîtier 30. Dans une option préférée, il peut être prévu d'installer une plaque de compression par compartiment ou chambre interne C4.

Comme illustré sur les figures 1 et 6, des plaques ou des éléments similaires à base de feutre F ou des éléments filtrants retenant les impuretés sont typiquement placés près des canules d'entrée pour filtrer des poussières, des gouttelettes de carburant liquide, ou autres impuretés.

Ainsi, près du dispositif de régulation de pression 2, à moins de 10 mm d'une extrémité de la vanne 10 ou 110 opposée à la tubulure 8, une plaque à base de feutre F s'étend dans un plan perpendiculaire à l'axe longitudinal A de la tubulure 8. Dans l'exemple de la figure 1, La distance entre la plaque à base de feutre F et l'embout 19 ou autre extrémité similaire de la vanne 10 peut être compris entre 1 et 5 mm (environ 3 mm dans le cas illustré).

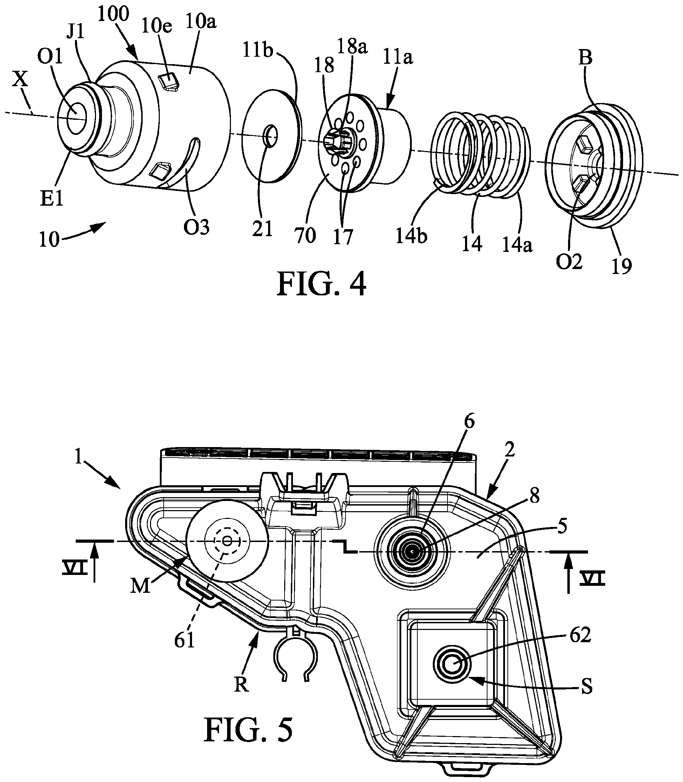

En référence aux figures 5 et 6, l'élément de boîtier 5 est ici présenté sous la forme d'un couvercle, fermant le réceptacle R ou fermant un composant de boîtier complémentaire, pour former l'enveloppe E. L'élément de boîtier 5 peut présenter plusieurs passages, par exemple trois passages communiquant avec le volume intérieur V :
- l'orifice 6 formé dans l'élément de boîtier 5 et traversant une portion de paroi PP délimitée entre la face interne 5a et la face externe 5b ;
- un orifice additionnel 61 permettant de former une entrée d'admission d'air M sans passer par la tubulure 8 ;
- un autre orifice additionnel 62 formant une sortie S permettant d'évacuer des gaz propres, la sortie S étant typiquement en communication avec l'admission d'air (via une ligne de retour 64 et un collecteur 65 par exemple) d'un moteur à combustion interne.

On peut voir que la tubulure 8 est rapportée sur l'élément de boîtier 5, par exemple en étant soudée dans une zone de bordure délimitant l'orifice 6 ou voisine de l'orifice 6. Le fait de rapporter la tubulure 8 d'admission des vapeurs de carburant sur l'élément de boîtier 5 permet de faciliter la fabrication de cet élément de boîtier 5 lorsqu'il comporte deux canules parallèles relativement proches. En effet, le démoulage des deux canules côte à côte serait rendu difficile du fait du manque de place pour le passage des coulisseaux. On peut ainsi obtenir une conception compacte d'un élément de boîtier 5 qui cumule des fonctions de raccordement et de régulation de pression.

La vanne 10 illustrée sur les figures 1, 2 et 4, et son mode de montage, vont à présent être décrits plus en détail.

En référence aux figures 1 et 2, la tubulure 8 constitue un support de montage de tout ou partie de la vanne 10, du côté de la deuxième extrémité 9b. La face interne de cette deuxième extrémité 9b forme une zone d'accrochage pour des moyens d'encliquetage ou autres éléments de connexion rapide situés sur la vanne 10. Plus généralement, il est permis d'emboîter la vanne 10 dans la tubulure 8, de sorte que la deuxième extrémité 9b entoure la vanne 10.

Dans le premier mode de réalisation, correspondant aux figures 1, 2 et 4, la vanne 10 présente un corps de vanne 10a dont une extrémité proximale est engagée contre la tubulure 8. Le corps de vanne 10a, peut inclure une pièce principale tubulaire 100 qui s'étend autour du clapet 11, en formant une paroi latérale et une pièce terminale consistant en un embout 19. La pièce principale tubulaire 100 forme l'extrémité proximale E1 qui est la plus proche d'un conduit d'entrée 80, étroit, de la tubulure 8.

La pièce principale tubulaire 100 présente une ouverture proximale O1 centrale et typiquement aussi étroite que le conduit d'entrée 80 (avec sensiblement le même diamètre interne dans l'exemple illustré). Ici le corps de vanne 10a est axialement en butée, par l'extrémité proximale E1, contre l'extrémité du conduit étroit 80, dans une zone d'élargissement de la tubulure 8 comme bien visible sur la figure 1.

Un conduit C10 de la vanne 10, par exemple généralement axial et extérieurement délimité par la pièce principale tubulaire, prolonge le conduit étroit 80 et peut être obturé de manière étanche par le clapet 11, par utilisation d'un élément d'étanchéité 11b flexible. L'élément d'étanchéité 11b est ici un diaphragme monté sur un flasque 70. Le flasque 70 est formé à l'extrémité d'un organe rigide 11a, cet organe rigide 11a et l'élément d'étanchéité 11b pouvant constituer le clapet 11. Le clapet 11 reste ici mobile à l'intérieur de la pièce principale tubulaire 100, en se déplaçant parallèlement à un axe X de la vanne 10 qui correspond à l'axe longitudinal A de la tubulure 8.

Le guidage du clapet 11 est un guidage linéaire par un tronçon, préférentiellement cylindrique, de la paroi tubulaire 12 formé par le corps de vanne 10a. Ce tronçon permet de guider le mouvement du flasque 70. Optionnellement, la conception hélicoïdale du ressort formant l'élément de rappel élastique 14, lui-même maintenu et/ou guidé en translation par le corps de vanne 10a, peut aussi participer au guidage du clapet 11.

Une surface de siège S10, fixe, est formée par la pièce principale tubulaire 100, par exemple par un épaulement interne de la pièce principale tubulaire 100. Dans ce cas, le type de contact sur la surface de siège S10 peut être axial.

La pièce principale tubulaire 100 est en outre pourvue :
- d'une ouverture élargie à l'opposé du conduit étroit 80, cette ouverture élargie étant obturée par l'embout 19 ; et
- au moins une ouverture latérale intermédiaire O3 formée sur un côté, à distance axiale de l'extrémité proximale E1.

A l'intérieur du corps de vanne 10a, formé par la pièce principale tubulaire 100 et l'embout 19, le clapet 11 peut se déplacer à l'encontre d'une force de rappel d'un ressort ou autre élément de rappel élastique 14. Le clapet 11 se déplace typiquement dans une zone plus large, dans le creux interne du corps de vanne 10a, que la zone où débouche le conduit étroit 80. Dans cette zone plus large, à distance axiale de l'extrémité proximale E1, le ressort, qui peut être un ressort hélicoïdal, présente par exemple une extrémité fixe 14a en appui sur l'embout 19 et une extrémité mobile 14b en appui contre le flasque 70 formé par l'organe rigide 11a.

La position fixe du corps de vanne 10a est permise :
- par un encliquetage ou fixation analogue sur la deuxième extrémité 9b de la tubulure 8,
- combiné à une fixation permanente de la tubulure 8 sur l'élément de boîtier 5, par exemple par soudure (soudure vibratoire par exemple), de façon à former au moins une première zone d'étanchéité annulaire C1, autour de la tubulure 8.

Par exemple la deuxième extrémité 9b présente des moyens de retenue, par exemple sous la forme d'une gorge annulaire, d'évidements ou de fenêtres, permettant de recevoir des ergots 10e radialement saillants vers l'extérieur, formés sur une face externe périphérique du corps de vanne 10a. Un nombre variable d'ergots 10e, peut être utilisé, par exemple trois ou quatre. Ces ergots 10e, par exemple venus de matière avec la paroi 12 de la pièce 100, peuvent coopérer avec des moyens de retenue espacés les uns des autres et à effet anti-rotation, afin de bloquer en rotation le corps de vanne 10a par rapport à la tubulure 8. Bien entendu, une fixation similaire peut être obtenue en utilisant des ergots ou des reliefs saillants formés intérieurement dans la deuxième extrémité 9b de la tubulure 8, afin de constituer des rebords de prise qui s'engagent dans des évidements correspondante de la face externe du corps de vanne 10a.

Le joint annulaire J1, supporté par le corps de vanne 10a du côté de l'extrémité proximale E1, s'engage en contact d'étanchéité radial contre une face interne de la tubulure 8 placée dans la zone d'élargissement de la tubulure 8. Il est ainsi formé une deuxième zone d'étanchéité annulaire C2, qui complète la première zone d'étanchéité annulaire C1, afin qu'aucun fluide ne puisse circuler :
- de l'extérieur vers l'intérieur ou vice versa entre la tubulure 8 et la bordure de l'orifice 6 formée par la portion de paroi PP,
- de l'extérieur vers l'intérieur ou vice versa entre la tubulure 8 et la face externe du corps de vanne 10a.

Autrement dit, pour sortir ou entrer dans l'absorbeur 1, des vapeurs de carburant doivent obligatoirement passer par le conduit C10 de la vanne 10 qui prolonge le conduit étroit 80 et qui peut être obturé de manière étanche par le clapet 11. La deuxième zone d'étanchéité annulaire C2 se situe typiquement à distance de la surface de siège S10 et elle est permanente à l'état monté de la vanne 10 sur la tubulure.

Dans des variantes de réalisation, le joint J1 peut éventuellement être supprimé et remplacé par une lèvre d'étanchéité ou autre relief annulaire d'étanchéité directement formé sur le corps de vanne 10a.

Dans ce premier mode de réalisation, l'utilisation d'un diaphragme peut être préférée pour former l'élément d'étanchéité 11b car cela permet de contrôler à la fois un flux entrant et un flux sortant. La vanne 10 est alors une vanne à deux sens de circulation. Pour cela l'élément d'étanchéité 11b, de forme annulaire et de faible épaisseur (par exemple moins de 3 mm, sans que cela ne soit limitatif), peut être maintenu solidaire du flasque 70 par une projection, des pattes de retenue 18 ou autre(s) organe(s) pour clipper l'élément d'étanchéité 11b en traversant l'ouverture centrale 21 de ce dernier. On peut noter que les pattes de retenue 18 laissent un degré de liberté en coulissement d'une partie centrale de l'élément d'étanchéité 11b, permettant d'obtenir une configuration bombée et espacée (au moins le long des pattes de retenue 18) de l'élément d'étanchéité 11b par rapport à la portion radiale du flasque 70. On peut ainsi former un passage d'écoulement central 18a pour les vapeurs de carburant, entre les pattes de retenue 18. Compte tenu de la présence d'ouvertures 17, par exemple des ouvertures axiales, qui traversent le flasque 70, une configuration bombée en direction du conduit 80 pour l'élément d'étanchéité 11b permet d'établir une communication entre une zone interne du conduit C10 située en arrière du flasque 70, du côté opposée au conduit 80, et une zone interne du conduit C10 adjacente au conduit étroit 80 de la tubulure 8.

L'effet de retenue, par les pattes de retenue 18, permet l'admission des vapeurs de carburant, en cas de différentiel de pression positif du côté du réservoir 15. En effet, l'élément d'étanchéité 11b est alors solidaire du coulissement vers l'arrière de l'organe rigide 11a incluant le flasque 70. Les vapeurs provenant du conduit étroit 80 peuvent circuler à l'intérieur du corps de vanne 10a, entre la bordure externe de l'élément d'étanchéité 11b et la face interne de la pièce principale tubulaire 100, avant de sortir de la vanne 100 par l'une au moins des ouvertures O2, O3. Ici l'ouverture O2 est formée axialement dans une portion de base B appartenant à l'embout 19. Cette ouverture O2 constitue une ouverture distale du corps externe 10a de la vanne 10.

Plus généralement, on comprend que la vanne 10 peut présenter un unique élément flexible 11b permettant deux sens de circulation de fluide : un premier sens entrant et un deuxième sens sortant. La membrane ou pièce élastique déformable analogue formant cet élément flexible 11b est apte à se déplacer/se conformer d'une position à une autre par les différences de pression entre le réservoir de carburant 15 et la zone de stockage de l'absorbeur 1. Autrement dit, par les variations de position ou conformation de l'élément flexible 11b,la vanne 10 permet de réguler la circulation de fluide au travers de l'orifice 6.

S'il y a une surpression dans le réservoir 15, celle-ci exerce une poussée sur l'élément flexible 11b et le piston ou organe rigide analogue 11a supportant l'élément d'étanchéité flexible 11b. Dans le premier mode de réalisation illustré, cela conduit à une compression du ressort hélicoïdal (ou autre élément de rappel élastique) et le passage du flux de vapeurs de carburant vers la zone de stockage du produit d'adsorption est permis, conformément au premier sens de circulation.

Le retour, vers le réservoir de carburant 15, de ces vapeurs stockées s'effectue grâce à tout type de passage traversant les éléments 11a et 11b, ici sous la forme des ouvertures 17 et passage(s) 18a formés sur le flasque 70 de l'organe rigide 11a formant piston, et par au moins une ouverture 21 ou passage traversant l'épaisseur de l'élément flexible 11b. Dans les options préférées, la zone de passage de gaz, qui est réalisée entre l'élément flexible 11b et l'organe rigide 11a se forme uniquement à l'état d'extension ou d'allongement maximal de l'élément de rappel élastique 14 et dans un état déformé de la membrane formant l'élément d'étanchéité 11b. En pratique, l'élément de rappel élastique 14 occupe une position haute, c'est-à-dire de poussée maximale du clapet 11 contre la surface de siège S10. Ces conditions propres au deuxième sens de circulation sont rencontrées seulement pour une différence de pression négative.

Avec ce deuxième sens de circulation pour le cas d'un différentiel de pression négatif (sens de circulation inversé), on évacue des vapeurs par l'orifice 6 au travers du conduit étroit 80. Dans ce cas la bordure externe de l'élément d'étanchéité 11b peut être considérée comme maintenue en contact contre la surface de siège S10, tandis qu'un flux de vapeurs circule vers le conduit étroit 80 en traversant successivement :
- l'ouverture O2 et/ou les ouvertures O3, formées dans le corps de vanne 10a (ouvertures O2, O3 typiquement situées en dehors de la tubulure 8),
- les ouvertures 17 qui sont radialement plus proches de l'axe central X de la vanne 10 que ne l'est la surface de siège S10,
- le passage d'écoulement central 18a, entre les pattes de retenue 18, rendu accessible du fait d'un espacement/décollement au centre (sous l'effet de la dépression du côté du conduit 80) de l'élément d'étanchéité 11b,
- et l'ouverture centrale 21 de l'élément d'étanchéité 11b.

Bien entendu, la vanne 10 peut être réalisée différemment, par exemple sans utiliser un diaphragme pour former l'élément d'étanchéité 11b et/ou en utilisant au moins deux éléments mobiles formant des clapets distincts.

Des exemples de fixation de la tubulure 8, préférentiellement par soudure, vont à présent être décrits en référence aux figures 1, 2, 6 et 8.

La tubulure 8 peut optionnellement être conçue de façon symétrique autour de l'axe longitudinal A. Plus généralement, la tubulure 8 présente une partie d'insertion 8a typiquement droite qui est insérée au travers d'une portion de paroi PP de l'élément de boîtier 5, dans l'orifice 6. Sur les figures 1 et 2, la portion de paroi PP est formée par une partie transversale (perpendiculaire à l'axe longitudinal A). La portion de paroi PP peut être formée dans une projection 24, saillante vers l'extérieur, de l'élément de boîtier 5. Cette disposition permet de loger la vanne 10 au moins en partie dans la cavité délimitée par cette projection 24.

La portion de paroi PP peut présenter un relief R5, ici un relief interne annulaire saillant du côté de la face interne 5a. Ce relief R5 de forme annulaire permet de former une ou plusieurs zones de soudure avec une zone périphérique de la tubulure 8, par exemple une zone périphérique où la tubulure s'élargit. Dans d'autres variantes, il n'est pas prévu ce type de relief R5. Optionnellement, une zone soudée peut être formée sur un collet ou un épaulement de la tubulure 8 qui est accolé à la face interne 5a dans une zone de bordure de l'orifice 6.

La soudure est de type vibratoire, avec un frottement entre les pièces 5 et 8 qui produit de la chaleur, ce qui a pour effet de fusionner les matières thermo-fusibles, typiquement des matières plastiques, de ces pièces. On utilise un outil vibrant connu en soi pour réaliser ce type de soudure (les fréquences peuvent être dans les ultrasons, par exemple de 20 kHz à 70 kHz.).

Typiquement, l'élargissement de la tubulure 8, formé du côté opposé à la première extrémité 9a (par exemple dans le prolongement de la portion d'insertion 8a) peut permettre de contenir au moins une partie de la vanne 10 ou 110 pour la loger au plus près du conduit étroit 80 et, dans ce cas, la zone soudée est formée sur un tronçon annulaire de la tubulure intercalé radialement entre la vanne 10, 110 et le relief R5 ou autre partie de l'élément de boîtier 5. Ce cas est rencontré dans le premier mode de réalisation, comme visible sur la figure 1, ou dans le deuxième mode de réalisation, comme visible sur les figures 6 et 8.

Dans le deuxième mode de réalisation, il est en outre permis de guider le clapet 111 de la vanne 110, par exemple en utilisant une portion de guidage 13 formée à la deuxième extrémité 109b de la tubulure 8. Dans ce cas, le clapet 111 peut présenter des dents 25 espacées les unes des autres ou autres projections axialement saillantes coulissant le long de la face interne de la portion de guidage 13. Cette conception, ici avec au moins deux ou trois dents 25, peut être préférée pour économiser de la matière dans le clapet et limiter les surfaces de contact et les frottements associés entre la portion de guidage 13 et l'organe rigide 111a incluant ces dents 25.

Dans les exemples représentés et à titre non limitatif, la portion d'insertion 8a peut faire saillie vers l'extérieur par rapport à la portion de paroi PP de l'élément de boîtier 5. La première extrémité 9a peut être plus étroite que la deuxième extrémité 9b ou 109b, afin de pouvoir traverser l'orifice 6 et former un raccord mâle pour un tuyau ou flexible appartenant à la ligne de ventilation 16 du réservoir de carburant 15. Au mois un relief externe annulaire 8b, formé sur la partie d'insertion 8a, peut faciliter l'obtention de l'étanchéité avec la ligne de ventilation 16. La tubulure 8 peut être complètement rigide et est par exemple réalisée sous la forme d'une canule en une seule pièce, typiquement allongée suivant la direction de l'axe longitudinal A.

Une ou plusieurs soudures peuvent être réalisées pour former une connexion directe étanche entre une face externe F8 de la tubulure 8 et la pièce monobloc formant la portion de paroi PP de l'élément de boîtier 5. La zone de contact ou la connexion correspond à une zone d'étanchéité annulaire C1 (avec par exemple deux soudures parallèles dans cette zone Z1, agencées de façon concentrique).

En référence à présent aux figures 5 et 6, la tubulure 8 d'amenée des vapeurs de carburant peut être espacée de l'entrée d'admission d'air M, de façon à ce que le compartiment intérieur, formant une première chambre interne C4 sous-jacente à la vanne 10 ou 110 dans le volume intérieur V de l'enveloppe E, soit séparé (ici par une cloison 23) d'un autre compartiment sous-jacent à l'orifice 61.

L'élément de boîtier 5 forme typiquement un couvercle d'un seul tenant, sur lequel sont formés l'entrée d'admission d'air M, l'orifice 6 pour l'insertion de la tubulure 8 et un orifice additionnel 62 pour évacuer des gaz purifiés par les moyens d'adsorption (pour un retour vers l'admission). Une canule peut être utilisée pour former la sortie S et permettre le raccordement aisé et rapide d'un flexible reliée à une admission du moteur. Dans une option, une canule peut aussi être prévue pour l'entrée d'air, ce qui facilite le raccordement d'un flexible, ceci étant utile pour les opérations de purge du charbon actif.

La répartition espacée des orifices 6, 61, 62, bien visible sur la figure 5, correspond à une option préférée. La distance, mesurée perpendiculairement à l'axe longitudinal A, entre la tubulure 8 et l'orifice 61 pour l'admission d'air M en cas de purge de l'absorbeur d'une part, ou entre la tubulure 8 et l'orifice 62 prévu pour la sortie S de vapeurs d'autre part, peut éventuellement être supérieure à 30 ou 40 mm, ce qui simplifie la conception de l'élément de boîtier 5. Cela peut faciliter aussi l'intégration successive de composants fonctionnels dans les orifices respectifs 6, 61, 62 lors des phases d'assemblage.

L'enveloppe E de l'absorbeur 1 peut être réalisée en tout matériau approprié, par exemple choisi parmi des polymères thermoplastiques moulés. Un matériau de type polyamide ou autre polymère résistant et rigide peut être préféré. L'enveloppe E, qui renferme le produit d'adsorption 4 apte à fixer des molécules gazeuses de carburant dans une ou plusieurs des chambres internes C4, peut être délimitée par l'élément de boîtier 5 et un réceptacle R ou bol ayant une paroi de fond 31 et une paroi latérale 32. Plusieurs des chambres internes C4 peuvent communiquer de l'une vers l'autre.

La liaison L entre l'élément de boîtier 5 et la paroi latérale 32 peut être permanente, résultant d'une soudure, ou de type amovible. La connexion annulaire 33 entre la pièce formant la paroi de fond 31 et la paroi latérale 32 peut être une soudure. Plus généralement, le boîtier 30 servant à définir l'enveloppe E peut être réalisé en un nombre variable de pièces, et permet de conserver étanche le volume intérieur V, au moins dans les conditions d'utilisation (différentiel de pression) correspondant à l'accumulation de vapeurs de carburant dans l'absorbeur 1.

Un dispositif de régulation de pression 2, conçu selon un deuxième mode de réalisation, va à présent être décrit en référence aux figures 5, 6 et 8.

Ici, le clapet 111 de la vanne 110 comprend un organe rigide 111a qui est sollicité vers la surface de siège S10 par le ressort hélicoïdal formant l'organe de rappel élastique 14. La mobilité du clapet 111 est similaire à la mobilité du clapet 11, parallèlement à l'axe longitudinal A qui coïncide avec l'axe central de la vanne 110. A la différence du premier mode de réalisation, la surface de siège est définie par la tubulure 8, ici à la deuxième extrémité 109b comme bien visible sur la figure 8. La deuxième extrémité 109b définit ainsi à la fois :
- un relief de rétention du côté extérieur (par exemple une gorge G annulaire),
- une surface de guidage du côté intérieur, et
- une surface de siège, formée au niveau du bord annulaire qui peut présenter un profil biseauté ou arrondi et/ou au niveau d'une zone de la surface de guidage.

La vanne 110 est de conception simplifiée et n'autorise une circulation qu'en cas de différentiel de pression positive du côté de la ligne de ventilation 16 (amenée des vapeurs de carburant en provenance du réservoir 15). En effet, dans ce cas, le ressort est comprimé et le clapet 111 muni du joint annulaire J2 formant l'élément d'étanchéité du clapet 111 libère le passage, ici de forme annulaire, entre l'organe rigide 111a et la tubulure 8.

Le fait de placer le joint J2 en contact avec la tubulure 8, dans une position d'obturation, permet de limiter l'encombrement du corps de vanne 110a. Ici, le corps de vanne 110a peut simplement consister en une pièce qui :
- supporte fixement l'extrémité fixe 14a de l'élément de rappel élastique 14 ; et
- est raccordée, typiquement par encliquetage, à la gorge G ou relief de rétention similaire formé sur la deuxième extrémité 109b de la tubulure 8.

Ici, le corps de vanne 110a peut comporter au moins deux, et de préférence trois ou quatre bras longitudinaux 27 reliés à une même base 28 sur laquelle est connectée l'extrémité fixe 14a. Un ou plusieurs organes formant clips sont prévus à l'extrémité libre de ces bras longitudinaux 27 ou dans au moins une portion annulaire raccordée à aux bras longitudinaux 27 du côté opposé à la base 28. Ici, un bourrelet 10b peut se clipper dans la gorge annulaire G de la deuxième extrémité 109b. Les passages entre les bras 27 permettent la circulation des vapeurs de carburant du réservoir 15 vers la zone de stockage de l'absorbeur 1, dans la position d'ouverture du clapet 111.

Le joint J2 peut être supporté dans une gorge annulaire circonférentielle de l'organe rigide 111a, située axialement entre les dents 25 (ou éléments similaires servant au guidage le long de la tubulure 8) et un bord libre de l'organe rigide 111a. L'extrémité mobile 14b du ressort peut être maintenue et éventuellement guidée dans un espace creux de l'organe rigide 111a.

On peut noter que, dans le deuxième mode de réalisation, la tubulure 8 est éventuellement identique ou très similaire à celle utilisée dans le premier mode de réalisation, seule la structure de la deuxième extrémité 9b, 109b pouvant différer. Ici dans le cas des figures 6 et 8, on voit que le corps de vanne 110a se fixe par la face externe de la tubulure 8, ce qui n'est pas forcément le cas en intégrant la vanne 10 du premier mode de réalisation ou vanne similaire permettant deux sens de circulation opposés selon les conditions de pression.

Dans le deuxième mode de réalisation, le diaphragme peut être supprimé et le joint J1 fixe est également supprimé. En effet, ces éléments sont remplacés par le joint annulaire J2 flexible et compressible, mobile avec le clapet 111 et qui forme la séparation étanche vis-à-vis de la tubulure. Ce joint J2 suffit, à lui seul, à empêcher le retour des vapeurs de carburant vers le réservoir 15 lorsqu'il n'y a pas de surpression du côté du réservoir 15.

On forme ainsi, par utilisation du joint J2, une deuxième zone d'étanchéité annulaire C2 qui vient compléter la première zone d'étanchéité annulaire C1 typiquement obtenue par soudure entre la tubulure 8 et la portion de paroi PP.

Dans une variante, le joint J2 peut éventuellement être réalisé intégralement avec le reste du clapet 111, par exemple en formant une lèvre annulaire d'étanchéité ou relief, bourrelet annulaire analogue apte à se comprimer/déformer élastiquement. Optionnellement le clapet 111 peut alors être réalisé d'une seule pièce.

Un des avantages d'un dispositif 2 selon l'invention est qu'il peut être installé sur un absorbeur 1 dont la conception peut être quelconque. La vanne 10, 110 ne forme pas l'interface d'étanchéité avec le boîtier. Ainsi, l'élément de boîtier 5 peut conserver un même format pouvant se monter sur une large variété de réceptacles R (de capacité variable notamment).

Un autre des avantages est la possibilité d'intégrer une vanne plus ou moins complexe du côté intérieur, le cas échéant standard, selon les besoins. Cela permet d'utiliser typiquement des vannes de conception simplifiée, par exemple avec une structure simple et compacte, et/ou de pouvoir démonter la vanne au besoin.

Il doit être évident pour les personnes versées dans l'art que la présente invention permet des modes de réalisation sous de nombreuses autres formes spécifiques sans l'éloigner du domaine d'application de l'invention comme revendiqué.

Ainsi, bien que les dessins montrent une vanne de conception simple, sans intégrer de composant fonctionnel (par exemple pour une fonction de mise à l'air, ou de limitation de flux), on comprend que la vanne 10, 110 peut optionnellement comporter un ou plusieurs composants fonctionnels, typiquement assemblés sur le corps de vanne 10a, 110a sans interférer avec la connexion vanne - tubulure.

Dans le cas où un composant de mise à l'air est intégré, on peut ajouter un diaphragme séparant l'extérieur à pression atmosphérique et la zone d'arrivée des vapeurs de carburant, tandis qu'un joint annulaire peut être utilisé autour de la zone de l'évent, pour réaliser une étanchéité annulaire entre le boîtier et ce composant fonctionnel de la vanne. Cette étanchéité s'effectue au niveau d'un passage de sortie spécifique formé dans le boîtier 30 pour cette mise à l'air.

Bien que la tubulure 8 est présentée comme ayant seulement la portion d'insertion formée par un élément tubulaire délimitant l'essentiel du conduit 80, on comprend que la tubulure 8 peut être agencée autrement et éventuellement être insérée par l'extérieur dans l'orifice 6 et/ou pourvue d'une portion élargie qui s'étend à l'extérieur.

Par ailleurs, on comprend que les particularités d'assemblage pour former la vanne 10, 110 peuvent être considérées de façon indépendante du mode de fixation précis de la tubulure 8.

## Revendications

1. Dispositif (2) de régulation de pression, pour un absorbeur de vapeurs de carburant (1) renfermant un produit d'adsorption (4) apte à fixer des molécules gazeuses de carburant, le dispositif (2) comprenant :
- un élément de boîtier (5) présentant une face interne (5a) et une face externe (5b), destiné à former tout ou partie d'une enveloppe (E) de l'absorbeur de vapeurs de carburant (1) ;
- un orifice (6) formé dans l'élément de boîtier (5) et traversant une portion de paroi (PP) de l'élément de boîtier (5) délimitée entre la face interne (5a) et la face externe (5b) ;
- une tubulure (8) d'amenée des vapeurs de carburant, la tubulure (8) s'étendant entre une première extrémité (9a) adaptée pour se connecter à une ligne de ventilation (16) d'un réservoir de carburant (15) et une deuxième extrémité (9b ; 109b) ; et
- une vanne (10 ; 110) pourvue d'un corps de vanne (10a ; 110a) et d'un clapet (11 ; 111), permettant de réguler la circulation de fluide au travers de l'orifice (6) ;
**caractérisé en ce que** la tubulure (8) :
- traverse la portion de paroi (PP), par une partie d'insertion (8a) de la tubulure (8) introduite dans l'orifice (6) ;
- est fixée à l'élément de boîtier (5), de façon à former au moins une zone d'étanchéité annulaire, dite première zone d'étanchéité annulaire (C1), autour de la tubulure (8) ; et
- constitue un support de montage de tout ou partie de la vanne (10 ; 110).

2. Dispositif selon la revendication 1, dans lequel la partie d'insertion (8a), qui inclut la première extrémité (9a), est insérée dans l'orifice (6) de façon à ce que la partie d'insertion (8a) s'étende essentiellement en saillie vers l'extérieur par rapport à la portion de paroi (PP) de l'élément de boîtier (5).

3. Dispositif selon la revendication 1 ou 2, dans lequel la tubulure (8) est constituée par une canule formée d'une seule pièce.

4. Dispositif selon la revendication 1, 2 ou 3, dans lequel un contact étanche direct entre une face externe (F8) de la tubulure (8) et une pièce monobloc formant la portion de paroi (PP) de l'élément de boîtier (5), qui est réalisé de façon circonférentielle, est inclus dans ladite première zone d'étanchéité annulaire (C1).

5. Dispositif selon l'une quelconque des revendications précédentes, dans lequel un élément d'étanchéité (11b ; J2) du clapet (11 ; 111) est placé en contact avec ou à l'intérieur de la tubulure (8), au moins dans une position d'obturation par le clapet empêchant des vapeurs de carburant de sortir de la tubulure (8) par la deuxième extrémité (9b ; 109b).

6. Dispositif selon l'une quelconque des revendications précédentes, dans lequel la vanne (10 ; 110) est logée au moins en partie du côté de la face interne (5a), de préférence entièrement du côté de la face interne (5a).

7. Dispositif selon l'une quelconque des revendications précédentes, dans lequel le corps de vanne (10a ; 110) est traversé par un axe central (X) coïncidant avec un axe longitudinal (A) de la tubulure (8),
et dans lequel le clapet (11 ; 111) est mobile en coulissement de façon parallèle à l'axe longitudinal (A) en étant guidé par l'un au moins parmi :
une paroi tubulaire (12) du corps de vanne (10a) ;
un élément de rappel élastique (14) lui-même guidé en translation par le corps de vanne (10a) ;
une portion de guidage (13) formée par la deuxième extrémité (109b) de la tubulure (8).

8. Dispositif selon l'une quelconque des revendications 1 à 7, dans lequel le clapet (11 ; 111) est adapté pour présenter :
- deux configurations, dont l'une correspond à une position du clapet distante d'une surface de siège (S10) pour permettre à des vapeurs de carburant, provenant d'un conduit (80) de la tubulure (8) qui s'étend jusqu'à la première extrémité (9a), de traverser la vanne (10 ; 110) selon une premier sens de circulation, et l'autre correspond à une position d'obturation du clapet dans laquelle le clapet (11 ; 111) est sollicité par une force de rappel d'un élément de rappel élastique (14) et maintenu en contact annulaire étanche avec la surface de siège (S10) en empêchant ledit premier sens de circulation,
- optionnellement une troisième configuration dans laquelle un élément d'étanchéité (11b) du clapet (11) présente une conformation élastiquement déformée alors que le clapet (11) est sollicité par l'élément de rappel élastique (14) vers la surface de siège (S10), de façon à permettre un deuxième sens de circulation opposé au premier sens de circulation pour renvoyer des vapeurs de carburant dans le conduit (80) de la tubulure (8).

9. Dispositif selon l'une quelconque des revendications 1 à 8, dans lequel le clapet (11) présente un organe rigide (11a) guidé parallèlement à un axe longitudinal (A) de la tubulure (8) et un élément d'étanchéité (11b) flexible monté sur l'organe rigide (11a), l'élément d'étanchéité (11b) étant apte à s'engager contre une surface de siège (S10) formée par le corps de vanne (10a), dans une position d'obturation du clapet (11).

10. Dispositif selon la revendication 9, dans lequel, à distance de la surface de siège (S10), une deuxième zone d'étanchéité annulaire (C2) est formée de façon permanente dans un état monté de la vanne (10) sur la tubulure (8), par un contact direct entre :
- la tubulure (8) ; et
- un joint annulaire (J1) supporté par le corps de vanne (10a) ou un relief annulaire d'étanchéité directement formé sur le corps de vanne (10a).

11. Dispositif selon l'une quelconque des revendications 1 à 8, dans lequel le clapet (111) présente un organe rigide (111a) guidé parallèlement à un axe longitudinal (A) de la tubulure (8) et un élément annulaire d'étanchéité (J2) flexible monté sur l'organe rigide (111a), de préférence dans une gorge circonférentielle de l'organe rigide, une deuxième zone d'étanchéité annulaire (C2) étant formée par un contact direct entre la tubulure (8) et l'élément annulaire d'étanchéité (J2) dans une position d'obturation du clapet (111).

12. Dispositif selon l'une quelconque des revendications précédentes, dans lequel l'élément de boîtier (5) est une pièce qui présente en outre au moins un orifice additionnel, de préférence deux orifices additionnels (61, 62), afin de :
- définir une entrée d'admission d'air (M) sans passer par la tubulure (8),
- former une sortie (S) permettant d'évacuer des gaz propres.

13. Absorbeur de vapeurs de carburant (1), comprenant une entrée d'admission d'air (M), un composant de boîtier ou réceptacle (R), et le dispositif (2) selon l'une quelconque des revendications précédentes de façon à inclure ladite tubulure (8) sous une forme séparée de l'entrée d'admission d'air (M) et adaptée pour se connecter à une ligne de ventilation (16) d'un réservoir de carburant (15), sachant que l'élément de boîtier (5) est fixé sur le composant de boîtier ou réceptacle (R) de façon étanche afin de former un boîtier qui délimite un volume intérieur (V), des moyens d'adsorption qui incluent au moins un produit d'adsorption (4) apte à fixer des molécules gazeuses de carburant étant contenus dans le volume intérieur (V), l'élément de boîtier (5) étant de préférence un couvercle d'un seul tenant sur lequel sont formés l'entrée d'admission d'air (M), l'orifice (6) pour l'insertion de la tubulure (8) et un orifice additionnel (62) pour évacuer des gaz purifiés par les moyens d'adsorption.

14. Méthode d'assemblage d'un élément de boîtier fonctionnel, destiné à faire partie d'un absorbeur de vapeurs de carburant (1) pouvant être relié à une ligne de ventilation (16) d'un réservoir de carburant (15), la méthode d'assemblage étant réalisée en utilisant une tubulure (8) d'amenée des vapeurs de carburant qui s'étend entre une première extrémité (9a) et une deuxième extrémité (9b ; 109b), la tubulure (8) étant de préférence, du côté de la deuxième extrémité, au moins en partie plus large qu'une partie d'insertion (8a) de la tubulure qui inclut la première extrémité, la méthode d'assemblage comprenant les étapes consistant essentiellement à :
- a) insérer, dans un orifice (6) traversant un élément de boîtier (5), la partie d'insertion (8a) de la tubulure (8), de préférence de façon à ce que la partie d'insertion s'étende essentiellement en saillie vers l'extérieur par rapport à une portion de paroi (PP) de l'élément de boîtier qui délimite l'orifice (6) ;
- b) monter, sur la tubulure (8), et de préférence du côté de la deuxième extrémité (9b ; 109b), une vanne (10 ; 110) afin de loger la vanne au moins en partie du côté d'une face interne (5a) de l'élément de boîtier (5), en permettant à la vanne de réguler la circulation de fluide au travers de l'orifice (6), la vanne (10 ; 110) étant pourvue d'un corps de vanne (10a ; 110a) et d'un clapet (11 ; 111) ;
- c) former une zone d'étanchéité annulaire (C1) tubulure - élément de boîtier, autour de la tubulure (8), par une fixation permanente qui rend la tubulure solidaire de l'élément de boîtier (5) ;
ce grâce à quoi, après les étapes a), b) et c), on obtient l'élément de boîtier fonctionnel pour réguler l'admission de vapeurs de carburant et apte à être fixé sur un composant de boîtier complémentaire ou un réceptacle (R), contenant un produit d'adsorption (4) servant à fixer des molécules gazeuses de carburant.

15. Méthode selon la revendication 14, dans laquelle un contact annulaire d'étanchéité vanne - tubulure est réalisé, lors de l'étape b) :
- soit de façon permanente dans l'état monté de la vanne (10),
- soit par obtention d'une position du clapet (111) en engagement contre la tubulure (8), laquelle position est prise par défaut du fait de la sollicitation du clapet (111) de la vanne (110) par un élément de rappel élastique (14) appartenant à la vanne (110).

## Patentansprüche

1. Druckregelungsvorrichtung (2) für einen Kraftstoffdampfabsorber (1), welcher ein Adsorptionsmittel (4) enthält, das dazu geeignet ist, gasförmige Kraftstoffmoleküle zu binden, wobei die Vorrichtung (2) umfasst:
- ein Gehäuseelement (5) mit einer Innenfläche (5a) und einer Außenfläche (5b), welches dazu bestimmt ist, das gesamte oder einen Teil einer Umhüllung (E) des Kraftstoffdampfabsorbers (1) zu bilden,
- eine Öffnung (6), die in dem Gehäuseelement (5) gebildet ist und durch einen Wandabschnitt (PP) des Gehäuseelements (5) verläuft, der zwischen der Innenfläche (5a) und der Außenfläche (5b) begrenzt ist,
- ein Kraftstoffdampfzufuhrrohr (8), wobei sich das Rohr (8) zwischen einem ersten Ende (9a), das dazu ausgebildet ist, mit einer Entlüftungsleitung (16) eines Kraftstofftanks (15) verbunden zu werden, und einem zweiten Ende (9b; 109b) erstreckt, und
- ein Ventil (10; 110), das mit einem Ventilkörper (10a; 110a) und einer Klappe (11; 111) versehen ist, welche es ermöglichen, den Fluidfluss durch die Öffnung (6) zu regeln;
**dadurch gekennzeichnet, dass** das Rohr (8)
- mit einem Einsatzteil (8a) des Rohrs (8), das in die Öffnung (6) eingeführt ist, durch den Wandabschnitt (PP) verläuft;
- an dem Gehäuseelement (5) derart befestigt ist, dass es wenigstens einen, als ersten ringförmigen Dichtungsbereich (C1) bezeichneten ringförmigen Dichtungsbereich um das Rohr (8) herum bildet; und
- einen Montageträger für das gesamte oder einen Teil des Ventils (10; 110) bildet.

2. Vorrichtung nach Anspruch 1, wobei das Einsatzteil (8a), welches das erste Ende (9a) umfasst, derart in die Öffnung (6) eingesetzt ist, dass sich das Einsatzteil (8a) bezüglich des Wandabschnitts (PP) des Gehäuseelements (5) im Wesentlichen nach außen erstreckt.

3. Vorrichtung nach Anspruch 1 oder 2, wobei das Rohr (8) durch eine einstückig geformte Kanüle gebildet ist.

4. Vorrichtung nach Anspruch 1, 2 oder 3, wobei in dem ersten ringförmigen Dichtungsbereich (C1) ein direkter Dichtungskontakt zwischen einer Außenfläche (F8) des Rohrs (8) und einem den Wandabschnitt (PP) des Gehäuseelements (5) bildenden einteiligen Abschnitt besteht, der in Umfangsrichtung ausgeführt ist.

5. Vorrichtung nach einem der vorhergehenden Ansprüche, wobei ein Dichtungselement (11b; J2) der Klappe (11; 111) in Kontakt mit oder innerhalb der Leitung (8) angeordnet ist, wenigstens in einer Klappenschließstellung, die verhindert, dass Kraftstoffdämpfe das Rohr (8) durch das zweite Ende (9b; 109b) verlassen.

6. Vorrichtung nach einem der vorhergehenden Ansprüche, wobei das Ventil (10; 110) wenigstens teilweise auf der Seite der Innenfläche (5a), bevorzugt vollständig auf der Seite der Innenfläche (5a), aufgenommen ist.

7. Vorrichtung nach einem der vorhergehenden Ansprüche, wobei der Ventilkörper (10a; 110) von einer Mittelachse (X) durchquert wird, die mit einer Längsachse (A) des Rohrs (8) zusammenfällt,
und wobei die Klappe (11; 111) parallel zur Längsachse (A) gleitend bewegbar ist, indem es durch wenigstens eines der folgenden Elemente geführt wird:
- eine rohrförmige Wand (12) des Ventilkörpers (10a),
- ein elastisches Rückstellelement (14), das seinerseits translatorisch durch den Ventilkörper (10a) geführt ist,
- einen Führungsabschnitt (13), der durch das zweite Ende (109b) des Rohrs (8) gebildet ist.

8. Vorrichtung nach einem der Ansprüche 1 bis 7, wobei das Ventil (11; 111) dazu ausgebildet ist, folgendes aufzuweisen:
- zwei Konfigurationen, von denen eine einer Klappenstellung entspricht, die von einer Fläche des Sitzes (S10) entfernt ist, um zu erlauben, dass Kraftstoffdämpfe, die von einer Leitung (80) des Rohrs (8) stammen, das sich bis zum ersten Ende (9a) erstreckt, durch das Ventil (10 ; 110) in einer ersten Strömungsrichtung fließen, und wobei die andere einer Klappenschließstellung entspricht, in der die Klappe (11; 111) durch eine Rückstellkraft eines elastischen Rückstellelements (14) beaufschlagt und in abgedichtetem ringförmigen Kontakt mit der Fläche des Sitzes (S10) gehalten wird, wodurch die erste Strömungsrichtung verhindert wird,
- optional eine dritte Konfiguration, wobei ein Dichtungselement (11b) der Klappe (11) eine elastisch verformte Konfiguration aufweist, während die Klappe (11) durch das elastische Rückstellelement (14) in Richtung der Fläche des Sitzes (S10) vorgespannt ist, um eine zweite, der ersten Strömungsrichtung entgegengesetzte Strömungsrichtung zu ermöglichen, um Kraftstoffdämpfe in die Leitung (80) des Rohrs (8) zurückzuführen.

9. Vorrichtung nach einem der Ansprüche 1 bis 8, wobei die Klappe (11) ein parallel zu einer Längsachse (A) des Rohrs (8) geführtes starres Element (11a) und ein an dem starren Element (11a) angebrachtes flexibles Dichtungselement (11b) aufweist, wobei das Dichtungselement (11b) dazu ausgebildet ist, an einer durch den Ventilkörper (10a) gebildeten Fläche des Sitzes (S10) in einer Schließstellung der Klappe (11) anzugreifen.

10. Vorrichtung nach Anspruch 9, wobei in einem Abstand von der Fläche des Sitzes (510) ein zweiter ringförmiger Dichtungsbereich (C2) permanent in einem montierten Zustand des Ventils (10) am Rohr (8) gebildet ist, durch einen direkten Kontakt zwischen :
- dem Rohr (8); und
- einer ringförmigen Dichtung (J1), die vom Ventilkörper (10a) getragen ist, oder einer ringförmigen Dichtungsentlastung, die direkt am Ventilkörper (10a) ausgebildet ist.

11. Vorrichtung nach einem der Ansprüche 1 bis 8, wobei die Klappe (111) ein parallel zu einer Längsachse (A) des Rohres (8) geführtes starres Element (111a) und ein an dem starren Element (111a) angebrachtes flexibles ringförmiges Dichtungselement (J2) aufweist, bevorzugt in einer umlaufenden Nut des starren Elements, wobei ein zweiter ringförmiger Dichtungsbereich (C2) durch direkten Kontakt zwischen dem Rohr (8) und dem ringförmigen Dichtungselement (J2) in einer Schließstellung der Klappe (111) gebildet ist.

12. Vorrichtung nach einem der vorhergehenden Ansprüche, wobei das Gehäuseelement (5) ein Teil ist, welches ferner wenigstens eine zusätzliche Öffnung, bevorzugt zwei zusätzliche Öffnungen (61, 62), aufweist, um :
- einen Lufteinlass (M) zu begrenzen, ohne durch das Rohr (8) zu verlaufen,
- einen Auslass (S) für die Evakuierung von Reingasen zu bilden.

13. Kraftstoffdampfabsorber (1), umfassend einen Lufteinlass (M), ein Gehäuseteil oder einen Behälter (R), und die Vorrichtung (2) nach einem der vorhergehenden Ansprüche, so dass das Rohr (8) in einer vom Lufteinlass (M) getrennten Form vorliegt und dazu ausgebildet ist, sich mit einer Entlüftungsleitung (16) eines Kraftstofftanks (15) zu verbinden, wobei das Gehäuseelement (5) an der Gehäusekomponente oder dem Aufnahmebehälter (R) abdichtend befestigt ist, um ein Gehäuse zu bilden, das ein Innenvolumen (V) begrenzt, Adsorptionsmittel, die wenigstens ein Adsorptionsprodukt (4) umfassen, das dazu geeignet ist, im Innenvolumen (V) enthaltene gasförmige Brennstoffmoleküle zu binden, wobei das Gehäuseelement (5) bevorzugt ein einteiliger Deckel ist, an dem der Lufteinlass (M), die Öffnung (6) zum Einführen des Rohrs (8) und eine zusätzliche Öffnung (62) zum Abführen von durch die Adsorptionsmittel gereinigten Gasen ausgebildet sind.

14. Verfahren zur Montage eines funktionellen Gehäuseelements, welches dazu bestimmt ist, Teil eines Kraftstoffdampfabsorbers (1) zu sein, der mit einer Entlüftungsleitung (16) eines Kraftstofftanks (15) verbunden werden kann, wobei das Montageverfahren unter Verwendung eines Kraftstoffdampfzufuhrrohrs (8) durchgeführt wird, das sich zwischen einem ersten Ende (9a) und einem zweiten Ende (9b; 109b) erstreckt, wobei das Rohr (8) bevorzugt an dem zweiten Ende wenigstens teilweise breiter ist als ein Einsatzteil (8a) des Rohrs, das das erste Ende einschließt, wobei das Montageverfahren die Schritte umfasst, die im Wesentlichen aus folgendem bestehen:
a) Einführen des Einsatzteils (8a) des Rohrs (8) in eine Öffnung (6), die durch ein Gehäuseelement (5) verläuft, bevorzugt derart, dass sich das Einsatzteil im Wesentlichen bezüglich eines Wandabschnitts (PP) des Gehäuseelements nach außen erstreckt, das die Öffnung (6) begrenzt
b) Anbringen eines Ventils (10;110) am Rohr (8) und bevorzugt auf der Seite des zweiten Endes (9b; 109b), um das Ventil wenigstens teilweise auf der Seite einer Innenfläche (5a) des Gehäuseelements (5) aufzunehmen, was es dem Ventil ermöglicht, den Fluidstrom durch die Öffnung (6) zu regulieren, wobei das Ventil (10; 110) mit einem Ventilkörper (10a; 110a) und einer Klappe (11; 111) versehen ist,
c) Bilden eines ringförmigen Dichtungsbereichs (C1) Rohr - Gehäuseelement um das Rohr (8) herum mittels einer dauerhaften Befestigung, die das Rohr mit dem Gehäuseelement (5) verbindet;
wodurch das Gehäuseelement nach den Schritten a), b) und c) zur Steuerung der Aufnahme von Kraftstoffdämpfen funktionsfähig erhalten wird und dazu geeignet ist, an einem komplementären Gehäusebauteil oder Behälter (R) angebracht zu werden, der ein Adsorptionsmittel (4) zur Bindung gasförmiger Kraftstoffmoleküle enthält.

15. Verfahren nach Anspruch 14, wobei in Schritt b) ein ringförmiger Ventil-Rohr-Dichtungskontakt hergestellt wird:
- entweder dauerhaft im montierten Zustand des Ventils (10),
- oder durch Erreichen einer Stellung der Klappe (111) in Eingriff mit der Mitte des Rohres (8), welche Stellung standardmäßig infolge der Beaufschlagung der Klappe (111) des Ventils (110) durch ein zum Ventil (110) gehörendes elastisches Rückstellelement (14) eingenommen wird.

## Claims

1. Pressure regulating device (2) for a fuel vapor absorber (1) containing an adsorption product (4) capable of fixing gaseous fuel molecules, the device (2) comprising:
- a housing member (5) having an inner face (5a) and an outer face (5b), intended to form all or part of a casing (E) of the fuel vapor absorber (1);
- an orifice (6) formed in the housing member (5) and passing through a housing member (5) wall portion (PP) defined between the inner face (5a) and the outer face (5b);
- a fuel vapor supply pipe (8), the pipe (8) extending between a first end (9a) adapted to connect to a ventilation line (16) of a fuel tank (15) and a second end (9b; 109b); and
- a valve (10; 110) provided with a valve body (10a; 110a) and closure member (11; 111), making it possible to regulate the circulation of fluid through the orifice (6); **characterized in that** the pipe (8):
- passes through the wall portion (PP), by means of an insertion portion (8a) of the pipe (8) introduced into the orifice (6);
- is fixed to the housing member (5), so as to form at least one annular sealing area, called the first annular sealing area (C1), around the pipe (8); and
- constitutes a mounting support for all or part of the valve (10; 110).

2. Device according to claim 1, wherein the insertion portion (8a), which includes the first end (9a), is inserted into the orifice (6) so that the insertion portion (8a) extends projecting substantially outwards relative to the wall portion (PP) of the housing member (5).

3. Device according to claim 1 or 2, wherein the pipe (8) consists of a tube formed as one piece.

4. Device according to claim 1, 2, or 3, wherein a direct sealing contact between an outer face (F8) of the pipe (8) and a single-piece part forming the wall portion (PP) of the housing member (5), which is established circumferentially, is included in said first annular sealing area (C1).

5. Device according to any one of the preceding claims, wherein a sealing member (11b; J2) of the closure member (11; 111) is placed in contact with or inside the pipe (8), at least in a position closed off by the closure member preventing fuel vapors from leaving the pipe (8) through the second end (9b; 109b).

6. Device according to any one of the preceding claims, wherein the valve (10; 110) is housed at least partly on the inner face (5a) side, preferably entirely on the inner face (5a) side.

7. Device according to any one of the preceding claims, wherein the valve body (10a; 110) is traversed by a central axis (X) coincident with a longitudinal axis (A) of the pipe (8),
and wherein the closure member (11; 111) is slidably movable parallel to the longitudinal axis (A) while being guided by at least one among:
- a tubular wall (12) of the valve body (10a);
- an elastic return member (14) which itself is guided in translation by the valve body (10a);
- a guide portion (13) formed by the second end (109b) of the pipe (8).

8. Device according to any one of claims 1 to 7, wherein the closure member (11; 111) is adapted to present:
- two configurations, one corresponding to a position of the closure member away from a seat surface (S10) in order to allow fuel vapors, coming from a channel (80) of the pipe (8) which extends to the first end (9a), to pass through the valve (10; 110) in a first flow direction, and the other corresponding to a closed position of the closure member in which the closure member (11; 111) is biased by a return force of an elastic return member (14) and is kept in sealed annular contact with the seat surface (S10) while preventing said first flow direction,
- optionally a third configuration in which a sealing member (11b) of the closure member (11) has an elastically deformed shape while the closure member (11) is biased by the elastic return member (14) towards the seat surface (S10), so as to allow a second flow direction opposite to the first flow direction in order to return fuel vapors into the channel (80) of the pipe (8).

9. Device according to any one of claims 1 to 8, wherein the closure member (11) has a rigid member (11a) guided parallel to a longitudinal axis (A) of the pipe (8) and a flexible sealing member (11b) mounted on the rigid member (11a), the sealing member (11b) being capable of engaging against a seat surface (S10) formed by the valve body (10a), in a closed position of the closure member (11).

10. Device according to claim 9, wherein, at a distance from the seat surface (S10), a second annular sealing area (C2) is permanently formed in the mounted state of the valve (10) on the pipe (8), by direct contact between:
- the pipe (8); and
- an annular seal (J1) supported by the valve body (10a) or an annular sealing relief directly formed on the valve body (10a).

11. Device according to any one of claims 1 to 8, wherein the closure member (111) has a rigid member (111a) guided parallel to a longitudinal axis (A) of the pipe (8) and a flexible annular sealing member (J2) mounted on the rigid member (111a), preferably in a circumferential groove of the rigid member, a second annular sealing area (C2) being formed by a direct contact between the pipe (8) and the annular sealing member (J2) in a closed position of the closure member (111).

12. Device according to any one of the preceding claims, wherein the housing member (5) is a part which further has at least one additional orifice, preferably two additional orifices (61, 62), in order to:
- define an air intake port (M) without passage through the pipe (8),
- form an outlet (S) allowing the discharge of clean gases.

13. Fuel vapor absorber (1), comprising an air intake port (M), a housing component or receptacle (R), and the device (2) according to any one of the preceding claims in a manner that includes said pipe (8) in a form separate from the air intake port (M) and adapted to be connected to a ventilation line (16) of a fuel tank (15), knowing that the housing member (5) is fixed on the housing component or receptacle (R) in a sealed manner in order to form a housing which defines an inside volume (V), adsorption means which include at least one adsorption product (4) capable of fixing gaseous fuel molecules being contained within the inside volume (V).

14. Method for assembling a functional housing member, intended to form part of a fuel vapor absorber (1) which can be connected to a ventilation line (16) of a fuel tank (15), the assembly method being carried out using a fuel vapor supply pipe (8) which extends between a first end (9a) and a second end (9b; 109b), the pipe (8) preferably being, towards the second end, wider at least in part than an insertion portion (8a) of the pipe which includes the first end, the assembly method comprising the steps consisting essentially of:
- a) inserting the insertion portion (8a) of the pipe (8) into an orifice (6) passing through a housing member (5), preferably so that the insertion portion extends projecting substantially outwards relative to a wall portion (PP) of the housing member which defines the orifice (6);
- b) mounting a valve (10; 110) on the pipe (8), and preferably towards the second end (9b; 109b), so that the valve is at least partially housed on the inner face (5a) side of the housing member (5), while allowing the valve to regulate the flow of fluid through the orifice (6), the valve (10; 110) being provided with a valve body (10a; 110a) and a closure member (11; 111);
- c) forming an annular sealing area (C1) between pipe - housing member, around the pipe (8), by a permanent attachment which renders the pipe integral with the housing member (5);
whereby, after steps a), b), and c), the functional housing member is obtained for regulating the admission of fuel vapors and suitable for attachment on a complementary housing component or a receptacle (R), containing an adsorption product (4) used to fix gaseous fuel molecules.

15. Method according to claim 14, wherein an annular sealing contact between valve - pipe is created during step b):
- either permanently in the assembled state of the valve (10),
- or by obtaining a position of the closure member (111) in engagement against the pipe (8), this position being assumed by default due to the biasing of the closure member (111) of the valve (110) by an elastic return member (14) that is part of the valve (110).
